# FASCICULE DE BREVET EUROPEEN

(11) **EP 3 731 989 B1**
(45) Date de publication et mention de la délivrance du brevet: **09.02.2022**
(21) Numéro de dépôt: 18822348.1
(22) Date de dépôt: 19.12.2018
(51) Int. Cl.: B23K 20/06

(54) **PROCÉDÉ D'ASSEMBLAGE D'UNE BAGUE DANS UNE PIÈCE TUBULAIRE PAR IMPULSION MAGNÉTIQUE**
VERFAHREN ZUR MONTAGE EINES RINGES IN EINEM ROHRSTÜCK DURCH MAGNETIMPULS
METHOD FOR ASSEMBLING A RING IN A TUBULAR PIECE BY MAGNETIC PULSE

(30) Priorité: 26.12.2017 FR 1763207
(43) Date de publication de la demande: 04.11.2020
(73) Titulaire: ADM28 S.àr.l., 2453 Luxembourg (LU)
(72) Inventeur: MANDEL, Eric, 02100 Saint Quentin (FR)
(74) Mandataire: Ipside
(86) Numéro de dépôt international: PCT/EP2018/085859
(87) Numéro de publication internationale: WO 2019/129575

(56) Documents cités:
- EP-A1- 1 649 963
- WO-A1-2013/174446
- FR-A1- 2 547 752

## Description

### Domaine de l'invention

La présente invention s'inscrit dans le domaine du soudage, plus particulièrement le domaine du soudage par impulsion magnétique. La présente invention porte sur un procédé d'assemblage d'une bague dans une pièce tubulaire conformément au préambule de la revendication 1 (voir par exemple EP1 649 963 A1).

### Etat de la technique

Dans certains domaines industriels, comme par exemple la construction automobile, la production de certaines pièces particulières nécessite d'assembler une bague réalisée en un matériau particulier, par exemple en cuivre, dans une pièce tubulaire qui est faite en un matériau différent, par exemple en acier inoxydable.

L'assemblage ainsi obtenu présente alors au niveau de la bague une double fonction.

D'une part, la bague peut présenter une fonction de fusible mécanique dans la mesure où la bague en cuivre représente une faiblesse structurelle de l'assemblage. L'assemblage aura alors tendance à se rompre au niveau de la bague en cas de choc.

D'autre part, la bague en cuivre peut présenter une fonction de contact électrique, par exemple pour contrôler ou réguler le débit d'un fluide passant à travers la pièce tubulaire et véhiculant un courant électrique plus ou moins important en fonction du débit. Le cuivre est en effet un meilleur conducteur de l'électricité que l'acier inoxydable.

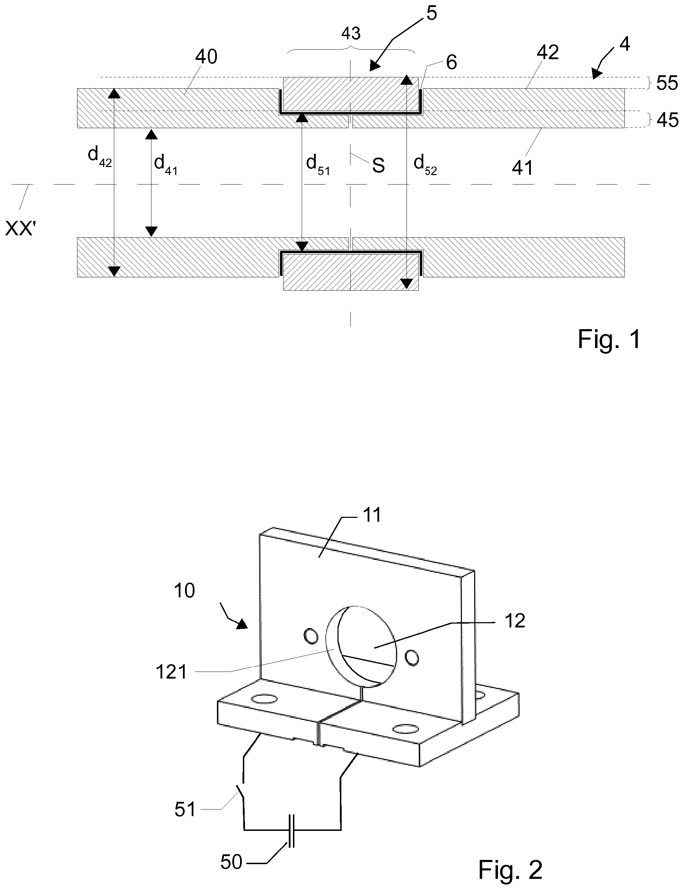

Il est connu de réaliser un tel assemblage par brasage. La figure 1 représente schématiquement comment une bague 5 peut être assemblée dans une pièce tubulaire 4 par brasage. La figure 1 est représentée selon une vue en coupe dans un axe longitudinal XX' de la pièce tubulaire 4.

Le diamètre intérieur d₅₁ de la bague 5 est supérieur au diamètre intérieur d₄₁ de la pièce tubulaire 4, et il est inférieur au diamètre extérieur d₄₂ de la pièce tubulaire 4. Le diamètre extérieur d₅₂ de la bague 5 est quant à lui supérieur au diamètre extérieur d₄₂ de la pièce tubulaire 4.

Pour pouvoir assembler la bague 5 dans la pièce tubulaire 4, il convient successivement de :
- former, par usinage, un évidement sur une portion longitudinale 43 de la paroi 40 de la pièce tubulaire 4 sur sa périphérie, l'évidement étant réalisé à partir d'une surface extérieure 42 de ladite paroi 40, de sorte qu'au niveau de l'évidement la surface extérieure 42 de la paroi 40 de la pièce tubulaire 4 présente un diamètre sensiblement égal au diamètre intérieur d₅₁ de la bague 5 (c'est dans cet évidement que viendra se loger la bague 5),
- appliquer dans l'évidement une fine couche de brasure 6, par exemple une couche d'argent,
- sectionner la pièce tubulaire 4 en deux parties selon un plan de section S orthogonal à l'axe XX' et passant au milieu de l'évidement,
- insérer chacune des deux extrémités sectionnées de la pièce tubulaire 4 dans la bague 5,
- souder la bague 5 à la pièce tubulaire 4 par brasage.

Il est ensuite nécessaire d'usiner la pièce obtenue par cet assemblage pour éliminer des renflements de la brasure et pour obtenir un aspect lisse des surfaces intérieure et extérieure la paroi de l'assemblage.

La soudure par brasage consiste à porter l'assemblage obtenu à haute température pour faire fondre la couche de brasure 6 au niveau de l'interface cuivre / acier inoxydable, puis à procéder à un refroidissement rapide pour lier les deux matériaux entre eux.

La soudure par brasage présente cependant de nombreux inconvénients. Il s'agit en effet d'un procédé particulièrement complexe à mettre en œuvre. Pour que le brasage se fasse dans de bonnes conditions, il convient d'avoir une interface particulièrement propre entre la bague en cuivre et la pièce tubulaire en acier inoxydable. Ceci est obtenu par un procédé de nettoyage complexe qui peut entraîner l'apparition d'une porosité de la bague en cuivre au niveau de la surface de brasage. Il devient alors difficile de maîtriser les conditions de rupture du fusible mécanique que représente la bague. En outre, l'utilisation d'un troisième matériau, à savoir la brasure, peut entraver le contact électrique au niveau de la bague. Aussi, l'alignement des deux morceaux de la pièce tubulaire est particulièrement délicat. Ce problème d'alignement est d'ailleurs aussi accentué par les chocs thermiques que représentent les étapes de chauffe et de refroidissement du brasage et qui peuvent entraîner une déformation de l'assemblage.

### Exposé de l'invention

La présente invention a pour objectif de remédier à tout ou partie des inconvénients de l'art antérieur, notamment ceux exposés ci-avant.

A cet effet, et selon un premier aspect, il est proposé par la présente invention un procédé d'assemblage d'une bague dans une pièce tel que défini dans la revendication 1.

Ladite pièce tubulaire comporte une paroi cylindrique présentant une surface intérieure et une surface extérieure. La bague et la pièce tubulaire sont réalisées dans des matériaux métalliques. Le procédé comporte les étapes de :
- réduction, sur une portion longitudinale de la pièce tubulaire, d'une épaisseur de la paroi de la pièce tubulaire de sorte à former un évidement trapézoïdal sur la périphérie de ladite portion longitudinale, la réduction de l'épaisseur de la paroi de la pièce tubulaire étant obtenue par enlèvement d'une couche de matière à partir de la surface extérieure de la paroi,
- positionnement de la bague autour de la portion longitudinale, la bague présentant, en vis-à-vis de l'évidement, une surface intérieure présentant une forme complémentaire à celle de l'évidement de la pièce tubulaire,
- positionnement de l'ensemble pièce tubulaire / bague dans une ouverture d'une bobine, de telle sorte que la portion longitudinale est disposée en regard de ladite bobine,
- soudage de la bague à la pièce tubulaire par impulsion magnétique générée par la bobine.

La bague est par exemple en cuivre, tandis que la pièce tubulaire est en acier inoxydable (d'autres choix de matériau sont cependant envisageables). Par « pièce tubulaire », on entend que la pièce a la forme d'un tube, sur tout ou partie de sa longueur, au moins au niveau d'une zone de recouvrement entre la bague et l'évidement.

Le soudage par impulsion magnétique (« Magnetic Pulse Welding » ou MPW dans la littérature anglo-saxonne), aussi couramment appelé « magnéto-soudage », utilise des forces électromagnétiques pour créer une « soudure froide » à température ambiante. Cela permet de souder deux matériaux métalliques différents ensemble sans avoir recours ni à la chaleur ni à un troisième matériau de liaison comme dans le cas de la brasure. On obtient ainsi un assemblage atomiquement et chimiquement pur, c'est-à-dire que l'assemblage présente une interface parfaite entre la bague et la pièce tubulaire sans une barrière constituée par un troisième matériau polluant. Pendant l'étape de soudage par impulsion magnétique, la bague est projetée contre la pièce tubulaire avec une force telle que les atomes des deux métaux partagent leurs électrons, créant ainsi un assemblage métallique en mixant les deux matériaux de base.

Dans une vue en coupe longitudinale selon un axe de la pièce tubulaire, l'évidement présente une forme de trapèze. La grande base de ce trapèze est située au niveau de la surface extérieure de la paroi de la pièce tubulaire. L'angle formé par ladite grande base et un côté du trapèze qui n'est pas une base a une importance particulière dans le procédé de magnéto-soudage. C'est en effet grâce à cet angle, dit « angle de collision » ou « angle d'impact », que le soudage par impulsion magnétique peut avoir lieu. La liaison de la bague avec la pièce tubulaire se fait en effet principalement au niveau des deux côtés non parallèle du trapèze. Lors de l'étape de magnéto-soudage, l'air est chassé à grande vitesse le long de ces côtés inclinés de l'évidement et des impuretés sont arrachées des premières couches de la matière au niveau de l'interface entre la bague et la pièce tubulaire, ce qui permet alors une liaison à l'échelle atomique.

Par « forme complémentaire », on entend que la surface intérieure de la bague qui est positionnée en regard de l'évidement présente une forme similaire mais inversée par rapport à la forme de l'évidement, de sorte que la bague vienne se loger dans l'évidement lors de l'étape de magnéto-soudage.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, le procédé d'assemblage comporte, ultérieurement à l'étape de soudage par impulsion magnétique, une étape d'usinage de la bague consistant à supprimer une couche de matière à partir d'une surface extérieure de ladite bague, de telle sorte que ladite surface extérieure de la bague affleure la surface extérieure de la pièce tubulaire.

Par « affleurer », on entend que la surface extérieure de la bague est mise à niveau avec la surface extérieure de la pièce tubulaire. Cet usinage, réalisé après l'étape de magnéto-soudage, permet ainsi d'obtenir une surface extérieure parfaitement lisse du produit obtenu par l'assemblage de la bague dans la pièce tubulaire. Outre l'aspect esthétique, cela procure un avantage en termes de sécurité puisque toute partie saillante et potentiellement coupante est éliminée à la surface extérieure de l'assemblage.

Dans des modes particuliers de mise en œuvre, le procédé d'assemblage comporte, ultérieurement à l'étape de soudage par impulsion magnétique, une étape d'usinage de la paroi de la pièce tubulaire consistant à supprimer une couche de matière à partir de la surface intérieure de la paroi de la pièce tubulaire, de telle sorte que la surface intérieure de la paroi affleure la surface intérieure de la bague.

Cet usinage, réalisé après l'étape de magnéto-soudage, permet d'assurer la conductivité électrique entre le fluide circulant dans le tube et la bague. En effet, la fine couche d'acier inoxydable restant sous la paroi intérieure de la bague est supprimée par cet usinage. L'assemblage obtenu est alors équivalent à deux morceaux de tube reliés par une bague, et au niveau de la bague, l'intérieur du tube est directement en contact avec la surface intérieure de la bague en cuivre. Cet usinage peut également permettre d'optimiser la fonction de fusible mécanique.

Dans des modes particuliers de mise en œuvre, les étapes d'usinage de la surface extérieure de la bague et de la surface intérieure de la pièce tubulaire sont réalisées simultanément.

Dans des modes particuliers de mise en œuvre, le trapèze correspondant à la forme de l'évidement selon une vue en coupe longitudinale dans un axe de la pièce tubulaire présente une grande base au niveau de la surface extérieure de la paroi de la pièce tubulaire, et une petite base opposée à ladite grande base, et chaque angle délimité par ladite grande base et un côté du trapèze est compris entre 8° et 20°.

Une telle valeur de l'angle de collision permet en effet d'obtenir des conditions optimales pour le soudage par impulsion magnétique.

Dans des modes particuliers de mise en œuvre, la bague est en cuivre et la pièce tubulaire est en acier inoxydable.

### Présentation des figures

L'invention sera mieux comprise à la lecture de la description suivante, donnée à titre d'exemple nullement limitatif, et faite en se référant aux figures 1 à 5 qui représentent :
- Figure 1 : représentation schématique de l'assemblage d'une bague dans une pièce tubulaire par brasage (figure déjà décrite dans l'état de la technique),
- Figure 2: représentation schématique selon une vue en perspective d'un dispositif d'assemblage par magnéto-soudage,
- Figure 3 : représentation schématique, selon une vue dans une coupe longitudinale, du positionnement d'une pièce tubulaire et d'une bague dans la bobine d'un dispositif d'assemblage par magnéto-soudage,
- Figure 4 : représentation schématique, selon une vue dans une coupe longitudinale, de l'assemblage obtenu par magnéto-soudage de la bague dans la pièce tubulaire,
- Figure 5: représentation schématique d'une autre forme de la bague envisageable pour le procédé d'assemblage selon l'invention.

Dans ces figures, des références identiques d'une figure à une autre désignent des éléments identiques ou analogues. Pour des raisons de clarté, les éléments représentés ne sont pas nécessairement à l'échelle, sauf mention contraire.

### Description détaillée d'un mode de réalisation de l'invention

Le procédé d'assemblage selon l'invention a pour but de réaliser l'assemblage d'une bague dans une pièce tubulaire par magnéto-soudage.

La figure 2 représente schématiquement un dispositif adapté pour réaliser un soudage par impulsion magnétique.

Le dispositif comporte une bobine 10, une unité de stockage 50 et un ou plusieurs commutateurs 51, comme illustré sur la figure 2.

L'unité de stockage 50 est reliée à la bobine 10 et au(x) commutateur(s) 51. L'unité de stockage 50 est configurée pour emmagasiner une forte énergie, par exemple de l'ordre de quelques dizaines de kilojoules (kJ).

Dans un exemple préféré de réalisation, l'unité de stockage 50 est une batterie de condensateurs de décharge.

La bobine 10 comporte, comme illustré sur la figure 2, un corps 11 dans lequel est pratiquée une ouverture 12 délimitée par une surface dite périphérique 121. Ladite ouverture tubulaire est configurée pour recevoir la pièce tubulaire et la bague, en vue de leur soudage. En d'autres termes, l'ouverture 12 présente par exemple une section transversale circulaire, dont le diamètre est supérieur à une section transversale maximale de la bague.

Le corps 11 est réalisé dans un matériau présentant des caractéristiques spécifiques en termes, d'une part, de résistance mécanique à la déformation plastique pour y faire circuler un courant de très forte intensité, de l'ordre de quelques centaines de milliers d'Ampères, et d'autre part de résistance à des températures élevées (c'est-à-dire une température de fusion élevée) pour ne pas fondre pendant le procédé de soudage.

Dans un exemple de réalisation, le corps 11 est en acier.

La bobine 10 est configurée pour qu'un courant de forte intensité puisse y circuler et produire un champ magnétique.

La bobine 10 est également configurée pour que la densité du courant dans une zone de la bobine, soit suffisante pour satisfaire les conditions de soudage. Cette zone est appelée partie active.

Dans le cas d'une bobine 10 telle que décrite dans ce mode de réalisation, le courant est concentré, dans la partie active, sur une couche délimitée par la surface périphérique 121 d'épaisseur correspondant à une épaisseur de peau. Le courant génère alors, dans l'ouverture 12, un champ magnétique concentré. Dans l'exemple non limitatif d'une bobine 10 réalisée en acier, l'épaisseur de peau est de l'ordre de quelques millimètres pour une fréquence de quelques dizaines de kHz.

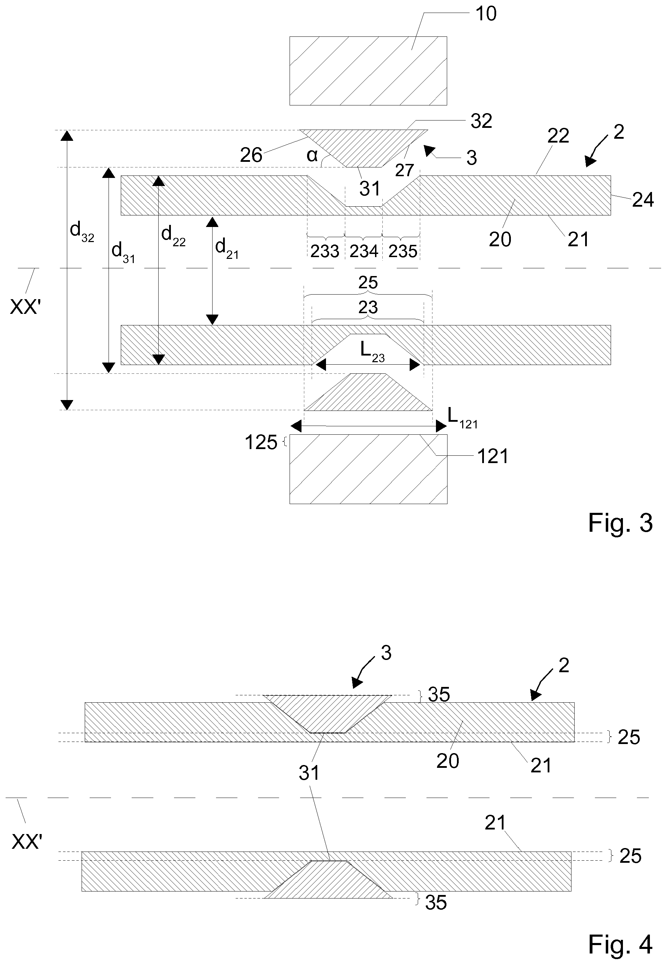

La figure 3 représente schématiquement, selon une vue dans une coupe longitudinale selon un axe XX', le positionnement d'une pièce tubulaire 2 et d'une bague 3 dans la bobine 10 d'un dispositif d'assemblage par magnéto-soudage tel que décrit en référence à la figure 2.

Par « pièce tubulaire », on entend que la pièce tubulaire 2 a la forme d'un tube, sur tout ou partie de sa longueur, et au moins au niveau d'une portion longitudinale 23 contre laquelle viendra se plaquer la bague 3 lors de l'assemblage. La pièce tubulaire 2 est préférentiellement de section transversale circulaire. Autrement dit, la pièce tubulaire 2 présente préférentiellement une paroi 20 qui a la forme d'un cylindre droit et circulaire (c'est-à-dire un cylindre de révolution) au moins sur ladite portion longitudinale 23.

Bien que ladite pièce tubulaire 2 soit décrite, et illustrée, de manière détaillée dans le cas d'une section transversale circulaire, d'autres formes de sections transversales, telles que ovale, rectangulaire ou triangulaire, peuvent s'appliquer.

Comme illustré sur la figure 3, la paroi 20 cylindrique de la pièce tubulaire 2 s'étend selon l'axe XX' et présente une surface intérieure 21 et une surface extérieure 22. La pièce tubulaire 2 présente un diamètre intérieur d₂₁ et un diamètre extérieur d₂₂. La différence entre le diamètre extérieur d₂₂ et le diamètre intérieur d₂₁ correspond alors au double de l'épaisseur de la paroi 20 de la pièce tubulaire 2.

Dans l'exemple considéré, et donné de manière nullement limitative, la paroi 20 de la pièce tubulaire 2 est en acier inoxydable et présente une épaisseur de 1,75 mm. Le diamètre extérieur d₂₂ de la pièce tubulaire 2 est de 13,5 mm.

Le procédé d'assemblage selon l'invention est à présent décrit.

Dans une première étape, l'épaisseur de la paroi 20 de la pièce tubulaire 2, est réduite sur la portion longitudinale 23, de longueur L₂₃.

Préférentiellement, la portion longitudinale 23 ne débute pas au niveau d'une extrémité 24 de la pièce tubulaire 2.

L'épaisseur de la paroi 20 de la pièce tubulaire 2 est réduite de sorte à former un évidement trapézoïdal sur la périphérie de la portion longitudinale 23. En d'autres termes, l'épaisseur de la paroi 20 de la pièce tubulaire 2, sur la longueur de la portion longitudinale 23, est réduite de telle sorte que :
- sur une première partie 233 de la portion longitudinale 23, l'épaisseur de ladite paroi 20 est monotone décroissante,
- sur une deuxième partie 234 de la portion longitudinale 23, dans la continuité de la première partie, l'épaisseur de ladite paroi 20 de la pièce tubulaire 2 est constante,
- sur une troisième partie 235 de la portion longitudinale 23, dans la continuité de la deuxième partie, l'épaisseur de ladite paroi 20 de la pièce tubulaire 2 est monotone croissante.

L'épaisseur de la paroi 20 de la pièce tubulaire 2 est avantageusement réduite à partir de la surface extérieure 22 de la paroi 20.

La réduction de l'épaisseur de la paroi 20 est obtenue par enlèvement d'une couche de matière à partir de la surface extérieure 22 de la paroi 20 de la pièce tubulaire 2.

Un moyen pour mettre en œuvre cette première étape consiste, par exemple, à réduire l'épaisseur de la paroi 20 de la pièce tubulaire 2 par usinage.

Le trapèze correspondant à la forme de l'évidement selon une vue en coupe longitudinale dans l'axe XX' présente alors une grande base de longueur L₂₃ au niveau de la surface extérieure 22 de la paroi 20 de la pièce tubulaire 2. Il présente une petite base de longueur inférieure à L₂₃ parallèle à la grande base. Dans l'exemple considéré et illustré à la figure 3, le trapèze est isocèle et présente un angle α délimité par ladite grande base et un des côtés non parallèle du trapèze.

Tel qu'illustré à la figure 3, l'évidement trapézoïdal est réalisé de telle sorte que la hauteur dudit trapèze (c'est-à-dire la distance entre sa grande base et sa petite base) est inférieure à l'épaisseur de la paroi 20 de la pièce tubulaire 2. Aussi, l'épaisseur de la bague 3 est au moins égale à la hauteur dudit trapèze.

La longueur L₂₃ de la portion longitudinale 23 est au plus égale à une longueur axiale L₁₂₁ de la surface périphérique 121 de la bobine 10.

Dans une deuxième étape, la bague 3 est positionnée autour de la pièce tubulaire 2.

La bague 3 présente une section transversale minimale supérieure au diamètre extérieur d₂₂ de la pièce tubulaire 2. Préférentiellement, la section transversale de la bague 3 présente une forme similaire à celle de la section transversale de la pièce tubulaire 2. Dans l'exemple décrit et illustré, la bague 3 présente une section transversale circulaire. La bague 3 présente alors un diamètre intérieur d₃₁ supérieur au diamètre extérieur d₂₂ de la pièce tubulaire 2, et un diamètre extérieur d₃₂. La différence entre le diamètre extérieur d₃₂ et le diamètre intérieur d₃₁ de la bague 3 correspond alors au double de l'épaisseur maximale de la bague 3.

Dans l'exemple considéré et présentement décrit de manière non limitative, la bague 3 présente une épaisseur de 2 mm.

La bague est réalisée de préférence dans un matériau métallique. Avantageusement, le matériau de la bague est différent de celui de la pièce tubulaire. Dans l'exemple présentement décrit, le matériau de la bague 3 est du cuivre.

La bague 3 est positionnée autour de la pièce tubulaire 2, de manière coaxiale, en formant, au niveau de leur superposition, une zone de recouvrement 25.

La pièce tubulaire 2 est engagée dans la bague 3 de sorte que la zone de recouvrement 25 couvre au moins la portion longitudinale 23 de la pièce tubulaire 2.

Comme illustré sur la figure 3, la bague 3 présente une surface extérieure 32 et une surface intérieure 31. La surface intérieure 31 de la bague 3 est destinée à être positionnée en vis-à-vis de la portion longitudinale 23 de la paroi 20 de la pièce tubulaire 2, et elle présente une forme complémentaire à celle de l'évidement qui a été réalisé dans la paroi 20 de la pièce tubulaire 2. Autrement dit, la surface intérieure 31 de la bague 3 qui est positionnée en regard de l'évidement présente une forme similaire mais inversée par rapport à la forme de l'évidement, de sorte que la bague 3 vienne se loger dans l'évidement lors de l'étape ultérieure de magnéto-soudage.

La bague 3 possède ainsi elle aussi une forme trapézoïdale. La petite base dudit trapèze a la même longueur que la petite base du trapèze de la forme de l'évidement. La hauteur du trapèze formé par une section longitudinale de la bague 3 selon l'axe XX' peut néanmoins présenter une hauteur plus importante que la hauteur du trapèze de la forme de l'évidement. Dans l'exemple considéré, ledit trapèze est isocèle et l'angle formé par la grande base du trapèze et chaque côté du trapèze est égal à l'angle α précédemment défini.

La bague 3 est positionnée, au niveau de la zone de recouvrement 25, de sorte que la forme complémentaire à l'évidement de sa surface intérieur 31 est placée en vis de l'évidement. Lors de l'étape de magnéto-soudage, la bague 3 viendra se loger dans l'évidement de la paroi 20 de la pièce tubulaire 2.

Dans une troisième étape, l'ensemble pièce tubulaire 2 / bague 3 est positionné dans l'ouverture 12 circulaire de la bobine 10 du dispositif d'assemblage par magnéto-soudage, de telle sorte que tout ou partie de la zone de recouvrement 25 est en vis-à-vis de la surface périphérique 121 de la bobine 10.

Plus particulièrement, la pièce tubulaire 2 et la bague 3 sont disposées dans l'ouverture 12 de la bobine 10 de sorte que la zone de recouvrement 25 est placée en vis-à-vis de la partie active 125 de la bobine 10.

Les moyens de fixation permettant de maintenir la pièce tubulaire 2 et la bague 3 dans l'ouverture 12 de la bobine 10 ne sont pas représentés sur la figure 3.

La pièce tubulaire 2 et la bague 3 sont maintenues dans l'ouverture 12 de la bobine 10 de manière coaxiale entre elles et avec l'ouverture 12 selon l'axe XX'.

La pièce tubulaire 2 est par exemple maintenue en place par des moyens de fixation extérieurs à la bobine. La bague 3 est par exemple maintenue en place par coincement dans un anneau en matière isolante, par exemple un anneau en plastique d'environ 1 mm d'épaisseur, positionné entre la surface périphérique 121 de la bobine 10 et la bague 3. Le diamètre extérieur de cet anneau en plastique correspond au diamètre de l'ouverture 12 de la bobine 10. Le diamètre intérieur de cet anneau en plastique correspond au diamètre extérieur d₃₂ de la bague 3.

L'ordre de mise en œuvre des deuxième et troisième étapes n'est pas imposé et, suivant des modes de mise en œuvre du procédé, peuvent être réalisées dans l'ordre inverse de l'ordre décrit, ou réalisées simultanément sans modifier le résultat desdites étapes.

A l'issue de ces étapes, la pièce tubulaire 2 et la bague 3 sont positionnées entre elles et dans la bobine 10.

Le procédé d'assemblage selon l'invention comporte ensuite une étape de soudage de l'ensemble pièce tubulaire 2 / bague 3 par impulsion magnétique.

L'unité de stockage 50 emmagasine une forte énergie. Lors de la fermeture du ou des commutateurs 51, la bobine 10 est reliée à l'unité de stockage. L'énergie est alors déchargée très rapidement, de l'ordre de quelques microsecondes, sur la bobine 10 et un courant de forte intensité circule dans la partie active 125 de la bobine 10.

Le courant génère un champ magnétique variable entre la bobine 10 et la bague 3 et induit dans la bague 3 des courants de Foucault.

Le courant induit dans la bague 3 associé au champ magnétique environnant développent dans la bague des forces volumiques importantes appelées forces de Lorentz. Ces forces de Lorentz exercent une pression magnétique sur la bague 3 radialement en tout point de ladite bague 3, l'accélérant alors en direction de la pièce tubulaire 2.

Sous l'action de ces forces centripètes, la bague 3 est alors projetée à très grande vitesse contre la pièce tubulaire 2. L'impact de la bague 3 contre la pièce tubulaire 2 provoque le soudage immédiat de la bague 3 avec la pièce tubulaire 2.

Pour que le soudage par impulsion magnétique de la bague 3 avec la pièce tubulaire 2 soit efficace, l'impact entre le cuivre de la bague 3 et l'acier inoxydable de la pièce tubulaire 2 doit se faire dans des conditions particulières où les deux surfaces peuvent échanger leurs atomes. A cette fin, les deux surfaces doivent être atomiquement et chimiquement pures. Pour cela, les deux surfaces sont nettoyées par l'action de l'impact du cuivre sur l'acier inoxydable en chassant l'air qui s'échauffe, prend de la vitesse (la vitesse pouvant atteindre 700 m/s), lèche les deux surfaces, et supprime toutes les pollutions (poussières, impuretés dans les premières couches de la matière, etc.). La création de ce "jet" micrométrique de matière solide arrachée aux surfaces à assembler se produit au début du contact entre les deux pièces et se propage à très haute vitesse tout au long des lignes d'assemblage correspondant aux côtés 26, 27 non parallèle du trapèze. Les surfaces de contact s'en trouvent mises à nue, permettant ainsi une liaison à l'échelle atomique, mais sans fusion.

La vitesse d'expulsion de l'air est dépendante de la dimension de l'angle de collision a. Il a été observé que pour les matériaux et les dimensions considérés dans l'exemple décrit, des conditions optimales de soudage ont lieu lorsque l'angle α est compris entre 8° et 20°. Dans l'exemple considéré, l'angle α prend préférentiellement la valeur de 10°. Il convient de noter que, dans un souci de clarté de la figure, l'angle α représenté sur la figure 3 est supérieur à la plage susmentionnée. Dans la réalité, le trapèze présente une forme nettement plus « aplatie ».

Lors de l'impact à très grande vitesse de la bague 3 en cuivre contre la pièce tubulaire 2 en acier inoxydable, les deux matériaux passent, au niveau de leur interface, d'un état solide à un état viscoplastique pendant un très court laps de temps (quelques dizaines de µs), provoquant alors leur liaison atomique.

Suite à cette étape de soudage par impulsion magnétique, la bague 3 et la pièce tubulaire 2 sont principalement soudées au niveau des surfaces formées sur la périphérie de la pièce tubulaire 2 par les côtés 26, 27 non parallèle de l'évidement trapézoïdal qui avait été réalisé dans la paroi 20 de la pièce tubulaire 2.

Lors de l'étape de magnéto-soudage, la bague 3 se déforme. Plus particulièrement, son diamètre se réduit sous l'action des forces électromagnétiques engendrées par la bobine 10 lorsqu'elle vient se plaquer dans l'évidement autour de la pièce tubulaire 2 sur la portion longitudinale 23.

La figure 4 représente schématiquement, selon une vue dans une coupe longitudinale, l'assemblage obtenu par magnéto-soudage de la bague 3 dans la pièce tubulaire 2.

Comme illustré sur la figure 4, il reste une couche 25 de matière dans la paroi 20 de la pièce tubulaire 2 sous la bague 3. Dans l'exemple considéré, cette couche 25 a une épaisseur de 0,5 mm.

Il peut être avantageux de supprimer cette couche 25 de matière par une étape supplémentaire d'usinage à partir de la surface intérieure 21 de la paroi 20 de la pièce tubulaire 2, de telle sorte que ladite surface intérieure 21 affleure la surface intérieure 31 de la bague 3. Par « affleurer », on entend que la surface intérieure 21 de la paroi 20 de la pièce tubulaire 2 est au même niveau que la surface intérieure 31 de la bague 3.

Cela signifie que suite à cette étape d'usinage, la surface intérieure de l'assemblage bague 3 / pièce tubulaire 2 est principalement en acier inoxydable sauf au niveau de la bague 3 où elle est en cuivre. Ceci permet avantageusement d'assurer une bonne conductivité électrique entre un fluide passant à l'intérieur de la pièce tubulaire 2 et la bague 3. En outre, la fonction de fusible mécanique jouée par la bague 3 est également optimisée.

Cette étape d'usinage reste néanmoins optionnel si l'on s'intéresse principalement à la fonction de fusible mécanique, et si la faiblesse structurelle apportée par l'ensemble constitué de la bague 3 en cuivre et de la fine couche 25 d'acier inoxydable est convenable pour l'application souhaitée.

Comme illustré sur la figure 4, il reste aussi généralement, suite à l'étape de magnéto-soudage, une couche 35 de matière de la bague 3 dépassant de la surface extérieure 22 de la paroi 20 de la pièce tubulaire 2.

Il peut être avantageux de supprimer cette couche 35 de matière par une étape supplémentaire d'usinage à partir de la surface extérieure 32 de la bague 3, de telle sorte que la surface extérieure 32 de la bague 3 affleure la surface extérieure 22 de la paroi 20 de la pièce tubulaire 2.

Cela signifie que suite à cette étape d'usinage, la surface extérieure de l'assemblage bague 3 / pièce tubulaire 2 est entièrement lisse. Outre l'aspect esthétique, cela procure un avantage en termes de sécurité puisque toute partie saillante et potentiellement coupante est éliminée à ladite surface extérieure de l'assemblage.

Il convient de noter que ces deux étapes d'usinage optionnelles effectuées après l'étape de magnéto-soudage peuvent être réalisées simultanément.

Il est notamment envisageable d'éviter l'étape d'usinage de la surface extérieure 32 de la bague 3 en déterminant l'épaisseur appropriée de la bague 3 pour que suite à l'étape de soudage par impulsion magnétique, la surface extérieure 32 de la bague 3 affleure directement avec la surface extérieure 22 de la paroi 20 de la pièce tubulaire 2.

Ces étapes d'usinage effectuées après l'assemblage par magnéto-soudage sont particulièrement coûteuses et il est donc avantageux de les éviter pour réduire le coût de production des pièces réalisées par le procédé d'assemblage selon l'invention.

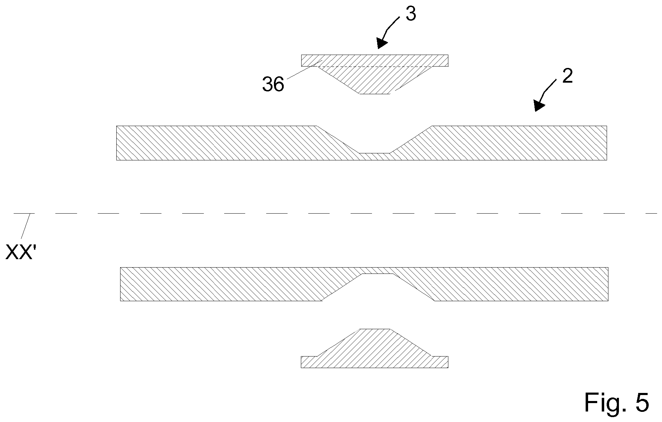

Il convient de noter que la bague 3 n'a pas forcément une forme trapézoïdale comme illustré sur les figures 3 ou 4. La bague 3 peut en effet prendre des formes diverses dans lesquelles seule une partie correspond à la forme trapézoïdale complémentaire à la forme de l'évidement réalisé dans la paroi 20 de la pièce tubulaire 2. A titre d'exemple, la figure 5 représente schématiquement une bague 3 dont la forme particulière présente une base rectangulaire 36 à laquelle est adjointe une forme trapézoïdale complémentaire à la forme de l'évidement.

La description ci-avant illustre clairement que par ses différentes caractéristiques et leurs avantages, la présente invention atteint les objectifs qu'elle s'était fixés.

En particulier, le procédé de soudage par impulsion magnétique est extrêmement rapide (une impulsion dure typiquement entre 10 et 100 µs et les seules contraintes de temps de cycle total sont dues au positionnement des pièces dans le dispositif d'assemblage).

C'est un procédé fiable, bien adapté à une production en grande série qui offre de nombreuses possibilités de soudage entre des matériaux ayant des points de fusion différents.

Comme il s'agit d'un soudage à froid, il n'y a pas de déformation indésirable des pièces assemblées.

Il n'y a pas besoin d'un nettoyage complexe des surfaces de liaison, comme dans le cas du brasage par exemple.

Un avantage du procédé de soudage par impulsion magnétique réside dans le fait que l'assemblage des deux pièces est effectué à l'état solide, ce qui permet de s'acquitter de tous les problèmes connus du soudage classique impliquant la fusion des matériaux.

L'invention a été décrite à titre d'exemple nullement limitatif pour une pièce tubulaire 2 en acier inoxydable et une bague 3 en cuivre présentant des dimensions bien particulières. Il convient cependant de noter que d'autres matériaux et d'autres dimensions peuvent être choisis pour la bague 3 et la pièce tubulaire 2. La forme de l'évidement et plus particulièrement l'angle de collision a sont alors déterminés adéquatement, de manière connue pour un spécialiste du soudage par impulsion magnétique.

Le choix des matériaux, des formes et/ou des dimensions de la bague 3 et de la pièce tubulaire 2 ne constituent que des variantes de la présente invention. La bague 3 et la pièce tubulaire 2 sont préférentiellement dans des matériaux différents de telle sorte qu'ils présentent des propriétés mécaniques et/ou électriques différentes.

## Revendications

1. Procédé d'assemblage d'une bague dans une pièce tubulaire (2), ladite pièce tubulaire (2) comportant une paroi (20) cylindrique présentant une surface intérieure (21) et une surface extérieure (22), la bague (3) et la pièce tubulaire (2) étant réalisées dans des matériaux métalliques,
ledit procédé étant **caractérisé en ce qu'**il comporte les étapes de :
- réduction, sur une portion longitudinale (23) de la pièce tubulaire (2), d'une épaisseur de la paroi (20) de la pièce tubulaire (2) de sorte à former un évidement trapézoïdal sur la périphérie de ladite portion longitudinale (23), la réduction de l'épaisseur de la paroi (20) de la pièce tubulaire (2) étant obtenue par enlèvement d'une couche de matière à partir de la surface extérieure (22) de la paroi (20),
- positionnement de la bague (3) autour de la portion longitudinale (23), la bague (3) présentant, en vis-à-vis de l'évidement, une surface intérieure (31) présentant une forme complémentaire à celle de l'évidement de la pièce tubulaire (2),
- positionnement de l'ensemble pièce tubulaire (2) / bague (3) dans une ouverture d'une bobine (10), de telle sorte que la bague (3) est disposée en regard de ladite bobine (10),
- soudage de la bague (3) à la pièce tubulaire (2) par impulsion magnétique générée par la bobine (10).

2. Procédé d'assemblage selon la revendication 1 comportant, ultérieurement à l'étape de soudage par impulsion magnétique, une étape d'usinage de la bague (3) consistant à supprimer une couche (35) de matière à partir d'une surface extérieure (32) de ladite bague (3), de telle sorte que ladite surface extérieure (32) de la bague (3) affleure la surface extérieure (22) de la paroi (20) de la pièce tubulaire (2).

3. Procédé d'assemblage selon l'une des revendications 1 ou 2 comportant, ultérieurement à l'étape de soudage par impulsion magnétique, une étape d'usinage de la paroi (20) de la pièce tubulaire (2) consistant à supprimer une couche (25) de matière à partir de la surface intérieure (21) de la paroi (20) de la pièce tubulaire (2), de telle sorte que la surface intérieure (21) de la paroi (20) affleure la surface intérieure (31) de la bague (3).

4. Procédé d'assemblage selon la revendication 2 comportant, ultérieurement à l'étape de soudage par impulsion magnétique, une étape d'usinage de la paroi (20) de la pièce tubulaire (2) consistant à supprimer une couche (25) de matière à partir de la surface intérieure (21) de la paroi (20) de la pièce tubulaire (2), de telle sorte que la surface intérieure (21) de la paroi (20) affleure la surface intérieure (31) de la bague (3), et dans lequel l'étape d'usinage de la surface extérieure (32) de la bague (3) et l'étape d'usinage de la surface intérieure (21) de la paroi (20) de la pièce tubulaire (2) sont réalisées simultanément.

5. Procédé d'assemblage selon l'une des revendications 1 à 4 dans lequel le trapèze correspondant à la forme de l'évidement selon une vue en coupe longitudinale dans un axe (XX') de la pièce tubulaire (2) présente une grande base au niveau de la surface extérieure (22) de la paroi (20) de la pièce tubulaire (2), et une petite base opposée à ladite grande base, et chaque angle délimité par ladite grande base et un côté du trapèze est compris entre 8° et 20°.

6. Procédé d'assemblage selon l'une des revendications 1 à 5 dans lequel la bague (3) est en cuivre et la pièce tubulaire (2) est en acier inoxydable.

## Patentansprüche

1. Verfahren zur Montage eines Rings in einem rohrförmigen Bauteil (2), wobei das rohrförmige Bauteil (2) eine zylindrische Wand (20) beinhaltet, die eine Innenoberfläche (21) und eine Außenoberfläche (22) aufweist, wobei der Ring (3) und das rohrförmige Bauteil (2) aus metallischen Werkstoffen gefertigt sind,
wobei das Verfahren **dadurch gekennzeichnet ist, dass** es die folgenden Schritte beinhaltet:
- Reduzieren auf einem Längsabschnitt (23) des rohrförmigen Bauteils (2) einer Dicke der Wand (20) des rohrförmigen Bauteils (2) um eine trapezförmige Ausnehmung an der Peripherie des Längsabschnitts (23) zu bilden, wobei das Reduzieren der Dicke der Wand (20) des rohrförmigen Bauteils (2) durch Entfernen einer Materialschicht von der Außenoberfläche (22) der Wand (20) erhalten wird,
- Positionieren des Ringes (3) um den Längsabschnitt (23) herum, wobei der Ring (3) gegenüber der Ausnehmung eine Innenoberfläche (31) aufweist, die eine ergänzende Form zu jener der Ausnehmung des rohrförmigen Bauteils (2) aufweist,
- Positionieren der Einheit rohrförmiges Bauteil (2) / Ring (3) in einer Öffnung einer Spule (10), derart, dass der Ring (3) in Bezug auf die Spule (10) angeordnet ist,
- Schweißen des Ringes (3) an das rohrförmige Bauteil (2) durch einen von der Spule (10) erzeugten Magnetimpuls.

2. Verfahren zur Montage nach Anspruch 1, nach dem Schritt des Schweißens durch Magnetimpuls einen Bearbeitungsschritt des Ringes (3) beinhaltend, der darin besteht, eine Materialschicht (35) von einer Außenoberfläche (32) des Ringes (3) zu entfernen, sodass die Außenoberfläche (32) des Ringes (3) bündig mit der Außenoberfläche (22) der Wand (20) des rohrförmigen Bauteils (2) ist.

3. Verfahren zur Montage nach Anspruch 1 oder 2, nach dem Schritt des Schweißens durch Magnetimpuls einen Bearbeitungsschritt der Wand (20) des rohrförmigen Bauteils (2) beinhaltend, der darin besteht, eine Materialschicht (25) von der Innenoberfläche (21) der Wand (20) des rohrförmigen Bauteils (2) zu entfernen, sodass die Innenoberfläche (21) der Wand bündig mit der Innenoberfläche (31) des Ringes (3) ist.

4. Verfahren zur Montage nach Anspruch 2, nach dem Schritt des Schweißens durch Magnetimpuls einen Bearbeitungsschritt der Wand (20) des rohrförmigen Bauteils (2) beinhaltend, der darin besteht, eine Materialschicht (25) von der Innenoberfläche (21) der Wand (20) des rohrförmigen Bauteils (2) zu entfernen, sodass die Innenoberfläche (21) der Wand (20) bündig mit der Innenoberfläche (31) des Ringes (3) ist, und wobei der Bearbeitungsschritt der Außenoberfläche (32) des Ringes (3) und der Bearbeitungsschritt der Innenoberfläche (21) der Wand (20) des rohrförmigen Bauteils (2) gleichzeitig durchgeführt werden.

5. Verfahren zur Montage nach einem der Ansprüche 1 bis 4, wobei das Trapez, welches der Form der Ausnehmung gemäß einer Ansicht im Längsschnitt in einer Achse (XX') des rohrförmigen Bauteils (2) entspricht, eine große Basis im Bereich der Außenoberfläche (22) der Wand (20) des rohrförmigen Bauteils (2) aufweist, und eine der großen Basis gegenüberliegende kleine Basis, und jeder Winkel, der durch die große Basis und eine Seite des Trapezes begrenzt wird, zwischen 8° und 20° enthalten ist.

6. Verfahren zur Montage nach einem der Ansprüche 1 bis 5, wobei der Ring (3) aus Kupfer ist, und das rohrförmige Bauteil (2) aus nichtrostendem Stahl ist.

## Claims

1. Method for assembling a ring in a tubular component (2), said tubular component (2) including a cylindrical wall (20) having an inner surface (21) and an outer surface (22), the ring (3) and the tubular component (2) being made from metal materials,
said method being **characterized in that** it includes the steps of:
- reducing, over a longitudinal portion (23) of the tubular component (2), a thickness of the wall (20) of the tubular component (2) so as to form a trapezoidal recess on the periphery of said longitudinal portion (23), the reduction in the thickness of the wall (20) of the tubular component (2) being obtained by removal of a layer of material from the outer surface (22) of the wall (20),
- positioning the ring (3) around the longitudinal portion (23), the ring (3) having, facing the recess, an inner surface (31) having a shape complementary to that of the recess of the tubular component (2),
- positioning the tubular component (2) / ring (3) assembly in an opening of a coil (10), in such a way that the ring (3) is disposed facing said coil (10),
- welding the ring (3) to the tubular component (2) by a magnetic pulse generated by the coil (10).

2. Assembly method according to claim 1, including, after the step of magnetic pulse welding, a step of machining the ring (3) involving eliminating a layer (35) of material from an outer surface (32) of said ring (3), in such a way that said outer surface (32) of the ring (3) is flush with the outer surface (22) of the wall (20) of the tubular component (2).

3. Assembly method according to one of claims 1 or 2, including, after the step of magnetic pulse welding, a step of machining the wall (20) of the tubular component (2) involving eliminating a layer (25) of material from the inner surface (21) of the wall (20) of the tubular component (2), in such a way that the inner surface (21) of the wall (20) is flush with the inner surface (31) of the ring (3).

4. Assembly method according to claim 2, including, after the step of magnetic pulse welding, a step of machining the wall (20) of the tubular component (2) involving eliminating a layer (25) of material from the inner surface (21) of the wall (20) of the tubular component (2), in such a way that the inner surface (21) of the wall (20) is flush with the inner surface (31) of the ring (3), and wherein the step of machining the outer surface (32) of the ring (3) and the step of machining the inner surface (21) of the wall (20) of the tubular component (2) are carried out simultaneously.

5. Assembly method according to one of claims 1 to 4, wherein the trapezoid corresponding to the shape of the recess according to a longitudinal cross-sectional view in an axis (XX') of the tubular component (2) has a long base at the outer surface (22) of the wall (20) of the tubular component (2), and a short base opposite to said long base, and each angle defined by said long base and a side of the trapezoid is between 8° and 20°.

6. Assembly method according to one of claims 1 to 5, wherein the ring (3) is made of copper and the tubular component (2) is made of stainless steel.
